# EUROPEAN PATENT SPECIFICATION

(11) **EP 0 672 824 B1**
(45) Date of publication and mention of the grant of the patent: **17.09.1997**
(21) Application number: 95103688.8
(22) Date of filing: 14.03.1995
(51) Int. Cl.: F02M 21/04, F02M 17/08, F02M 21/06

(54) **Gas-fuelled engine**
Mit flüssigem Gas betriebene Brennkraftmaschine
Moteur alimenté à gaz

(30) Priority: 14.03.1994 JP 68172/94
(43) Date of publication of application: 20.09.1995
(73) Proprietor: YAMAHA HATSUDOKI KABUSHIKI KAISHA, Iwata-shi Shizuoka-ken, 438 (JP)
(72) Inventor: Matsumoto, Hiromitsu, Shizuoka-ken, 438 (JP)
(74) Representative: Grünecker, Kinkeldey, Stockmair & Schwanhäusser Anwaltssozietät

(56) References cited:
- WO-A-94/04813
- DE-A- 3 205 935
- DE-C- 3 044 744
- GB-A- 2 096 243
- US-A- 4 168 685
- US-A- 4 381 753
- PATENT ABSTRACTS OF JAPAN vol. 004 no. 120 (M-028) ,26 August 1980 & JP-A-55 078146 (AUTOMOB ANTIPOLLUT & SAF RES CENTER) 12 June 1980,
- PATENT ABSTRACTS OF JAPAN vol. 006 no. 246 (M-176) ,4 December 1982 & JP-A-57 143153 (SUZUKI JIDOSHA KOGYO KK) 4 September 1982,
- PATENT ABSTRACTS OF JAPAN vol. 018 no. 628 (M-1713) ,30 November 1994 & JP-A-06 241125 (YAMAHA MOTOR CO LTD) 30 August 1994,

## Description

The present invention relates to a gas-fuelled engine comprising a charge forming system having a variable venturi device that mixes gaseous fuel with air, and a throttle valve device being disposed separated from and downstream of the variable venturi device.

In the past, when a gaseous fuel such as liquefied petroleum gas (LPG) was used as a fuel for automobile engines, the fuel itself was stored in liquid form in the tank, but before being supplied to the engine it would be vaporized by a fuel vaporization device, and then the resulting gaseous fuel would be mixed with air by an air/fuel mixture device.

Most of the above mentioned air/fuel mixture-forming devices were composed of a fixed venturi unit, a main jet which opened into a mixer, and a butterfly type throttle valve portioned downstream of this mixer. The throttle valve was attached to the body of the mixer. In other words, the mixer and the throttle valve were a part of a single assembly.

The problem with the above described air/fuel mixture-forming device is that after being in use for a number of years, the air/fuel mixture ratio would tend to deviate from its initial setting. This was caused by carbon and other deposits forming in the fixed venturi and in the main jet opening. The cause is believed to be the formation of oil mists and the subsequent solidification and the carbonation such impurities, which become intermixed by the EGR device or by the blow-by gas return device in the air intake passage and are then blown back into the engine by these intake return systems.

Another problem with the mixture-forming devices of the prior art is that the unitization of the fixed venturi unit and the throttle valve caused the overall assembly to be bulky, and if it was located in close proximity to the air intake manifold inside the V-bank of a V-type engine, the total height requirement of the engine would be increased. To wit, when the foregoing V-type engine was mounted in an automobile, it was necessary to increase the hood height.

Document JP-A-55078146 representing the closest prior art as apparent from the preamble of claim 1 discloses a gas-fuelled engine which comprises a charge forming system having a variable venturi device that mixes gaseous fuel with air, and a throttle valve device being disposed separated from and downstream of the variable venturi device.

However, this disclosed gas-fuelled engine causes the same already mentioned problems.

Accordingly, it is an objective of the present invention to provide a gas-fuelled engine as indicated above which allows to avoid the above described problems and presents the formation of carbon and other deposits in the venturi area or at the openings of the main jets, to thereby maintain the initial properties of the said area over the long term, and, moreover to avoid increased hood heights to be required when the engine is used in automobiles.

In to perform said objective, the present invention provides a gas-fuelled engine as indicated above which is improved in that the engine is of the V-type comprising a V-bank arrangement of two rows of cylinders and that the throttle valve device is disposed inside a V-space of the V-bank arrangement, while the variable venturi device being disposed outside of the V-bank arrangement in an axial direction of a crankshaft.

Preferably, the engine comprises a fuel supply device having a bend area in the air intake member and that the throttle valve is positioned downstream of that bend area.

According to yet another preferred embodiment of this invention, the air intake passage connecting the variable venturi device and the throttle valve device branches via bent areas inside the V-bank arrangement into two downstream ends, each connected to an intake manifold of a respective row of cylinders and supporting a butterfly type throttle valve in said downstream ends.

The present invention makes it possible to position the throttle valve on the engine side at an adequate separation from the venturi unit. The arrangement keeps the throttle valve in the vicinity of the engine and prevents the reverse flow of oil mists and other foreign contaminants caused by blow back of intake air in the air intake passage. And further, the high density air/fuel mixture flowing from the venturi area toward the throttle valve holds these contaminants almost entirely in check by means the comparatively high air intake flow.

Moreover, regarding the provision of a bend area between the variable venturi device and the downstream throttle valve device, said bend area results in the relatively heavy contaminates moving backward through the air intake passage to collide with the inner wall of the bend area of the air intake member, thereby preventing their further reverse flow.

The preferred embodiment of this invention places the relatively small throttle valve inside the V-bank but moves the relatively large variable venturi mixer outside the V-bank to reduce engine height requirements.

In the following the present invention is explained in greater detail by means of several embodiments thereof is in conjunction with the accompanying drawings, wherein:
Figure 1 is a component diagram of a fuel supply device of a gas-fuelled engine,
Figure 2 is a sectional view of the main elements of the fuel supply device of Figure 1,
Figure 3 is a graph of the relationship between an amount of intake air flow and amount of fuel flow,
Figure 4 is an enlarged sectional view of a fuel vaporisation device of the fuel supply system of Figure 2,
Figure 5 is a top sectional view of another embodiment of the a fuel supply device showing an axial line of a metering piston lying within the same plane as a center line of an air intake pipe member,
Figure 6 is a top sectional view of another embodiment of the gas-fuelled engine and associated fuel supply system showing an axial line of a metering piston with a vertical orientation and an axial line of an air intake pipe member having a horizontal orientation,
Figure 7 is a view along arrow VII in Figure 6,
Figure 8 is a top sectional view of another embodiment showing an axial line of a metering piston and an axial line of an air intake pipe member lying in the same vertical plane,
Figure 9 is a view along narrow IX in Figure 8,
Figure 10 is a top view showing an embodiment of the present invention of a fuel supply device for gas-fuelled engines installed on a V-type engine,
Figure 11 is an enlarged top sectional view of the principal parts of the embodiment of Figure 10, and
Figure 12 is a view along arrow XII in Figure 11.

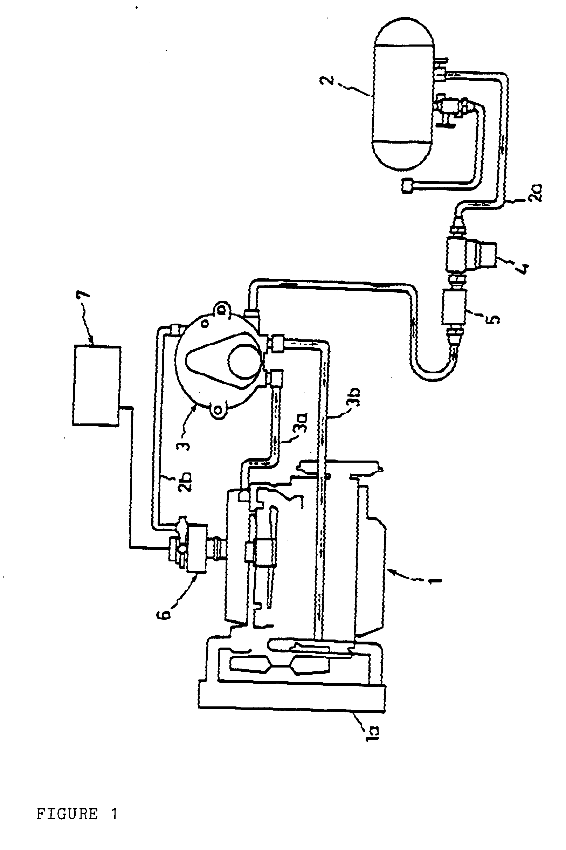

An embodiment of this invention will be described in detail below with reference to Figures 1 through 4.

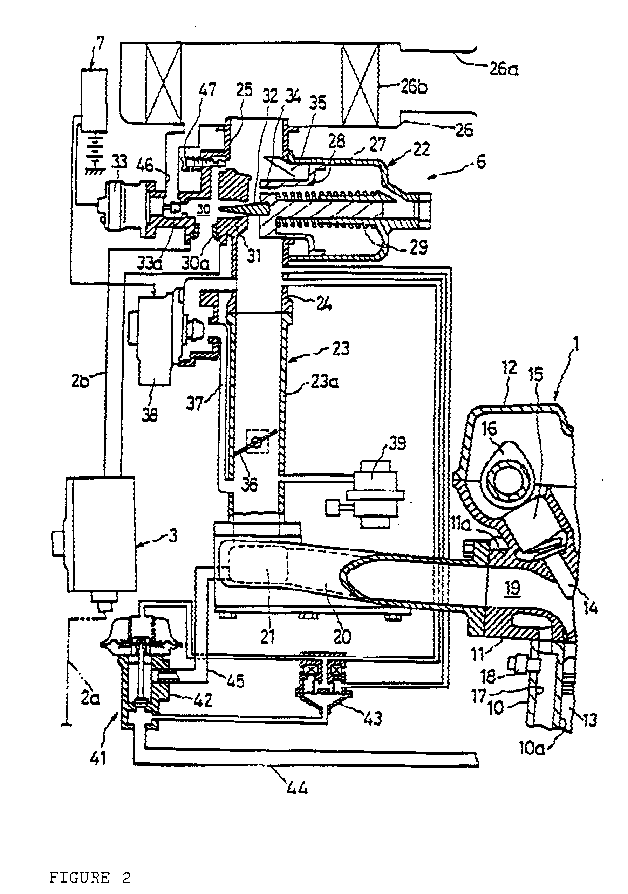

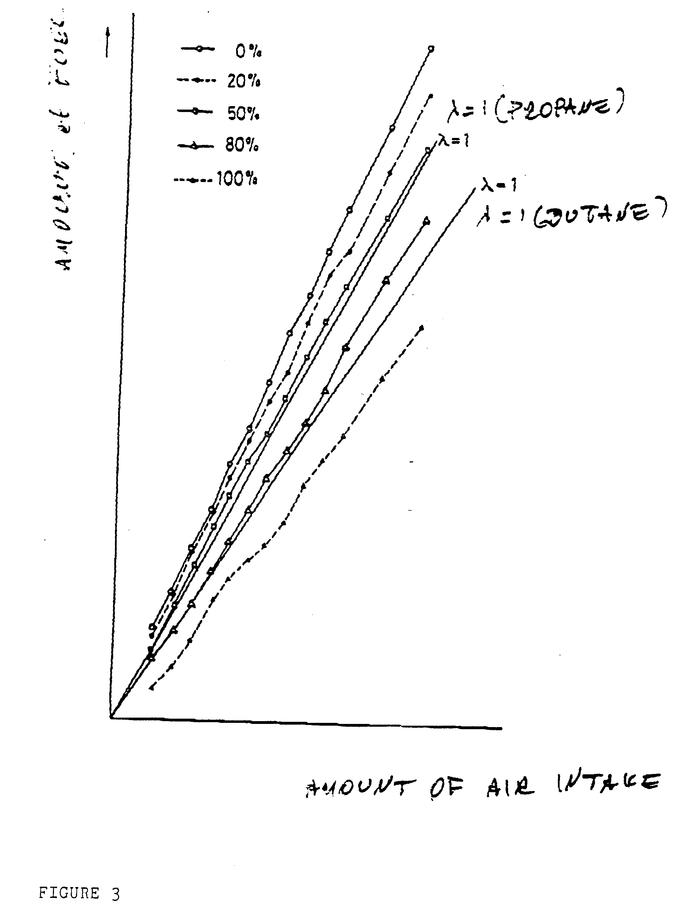

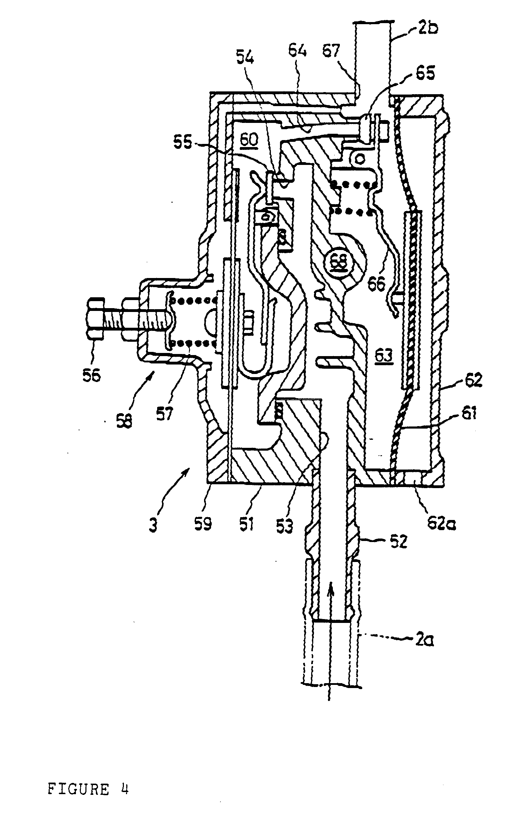

Figure 1 is an assembly diagram of an embodiment of the fuel supply device for gas-fueled engines of this invention; Figure 2 is a vertical sectional view of an embodiment of the fuel supply device for gas-fueled engines of this invention; Figure 3 is a graph of the relationship between air intake flow and fuel flow; and Figure 4 is an enlarged sectional view of the fuel vaporization device. This embodiment will be explained in terms of a fuel supply device for gas-fueled engines used in automobiles.

In Figure 1, 1 is a gas-fueled engine, 2 is a storage or fuel tank for holding the gaseous fuel. The gas in fuel tank 2 is stored under pressure in liquid form, and the fuel line 2a has been designed to transmit the fuel in a liquid form. The above mentioned gaseous fuel could be butane, propane, a mixture of them, or any other gaseous fuel substance known to the art.

The upstream end of the foregoing fuel line 2a is connected to fuel tank 2 while the other end is connected, through a filter 4 and solenoid valve 5, to the fuel inlet of a pressure regulator-3 that will be described below. The aforementioned pressure regulator 3 heats the LPG gaseous fuel used in this embodiment to vaporize it from its liquid state, thereby also functioning as a fuel vaporization device. This pressure regulator 3 is also connected with a mixture-forming device 6, described below, by means of fuel line 2b. 3b is a coolant supply pipe which transmits engine coolant to the pressure regulator 3. 2b is a return line for the engine coolant from the pressure regulator 3 back to the engine 1.

This fuel supply device transmits liquid fuel from the fuel tank 2 to a pressure regulator 3 which vaporizes it into a gas at approximately atmospheric pressure. The gaseous fuel is then mixed with air by the mixture-forming device 6 and supplied to the engine 1.

In Figure 1, reference number 7 indicates an engine control unit (ECU) that controls this fuel supply device. This ECU 7 controls the operation of such devices as a control valve mechanism, to be described later, that is a part of the mixture-forming device 6, and the ignition system of the engine 1.

The above mentioned gas-fueled engine 1 is a water-cooled 4-cylinder, 4-valve type engine. As shown in Figure 2, the cylinder block 10 is mounted atop a crankcase (not shown), and the cylinder head 11 is fastened on top of the cylinder block 10 by means of head bolts (not shown). A head cover 12 is further attached atop the cylinder head 11. Pistons 13 have been slidably inserted into the cylinder bores 10a formed in the foregoing cylinder block 10. These pistons 13 are joined to the crankshaft (not shown) by connecting rods.

Concave combustion areas have been formed on the bottom of the foregoing cylinder head 11, and these, together with the cylinder bores 10a and the tops of the pistons 13, form the combustion chambers. Two air intake valve openings and two exhaust valve openings are also formed in each of the foregoing concave combustion areas.

Air intake valves 14, and exhaust valves (not shown) have been installed in the respective air intake valve openings and exhaust valve openings to open and close those openings. These air intake valves 14 and exhaust valves also have respective air intake lifters 15, and exhaust lifters (not shown) affixed to their top ends, and these are located parallel to each other in the direction perpendicular to the cylindrical axis. Also, sparkplugs are installed in the foregoing cylinder head 11 so that their electrodes are positioned in the center of the foregoing concave combustion areas.

Also a cleaning or cooling jacket 17 through which engine coolant is circulated by a coolant pump (not shown) is present inside the foregoing cylinder block 10 and cylinder head 11. A coolant temperature sensor 18 also projects into this cleaning jacket 17 in the cylinder block 10. This coolant temperature sensor 18 is connected to the foregoing ECU 7 by wires (not shown) to transmit the coolant-temperature output. This engine coolant is cooled by circulating it through an external heat exchanger la (Figure 1). It is also possible to attach the foregoing coolant temperature sensor 18 in the area of the thermostat (not shown) that is located near the heat exchanger la.

An air intake passage 19 is present in the side wall lla of the cylinder 11 which passes air to the combustion chamber through the air intake valve openings. An exhaust passage is present on the opposite side of the head from this side wall 11a and connects with the combustion chamber through the exhaust valve opening. The wall surface subtending the opening of the foregoing air intake passage 19 is connected to one end of the air intake manifold 20, while the wall surface subtending the opening of the foregoing exhaust passage is connected to one end of the exhaust manifold.

A plenum chamber 21 is located at the other end of the foregoing air intake manifold 20. Also the other end of the foregoing exhaust manifold is connected to a catalytic converter with a catalyst layer. This catalytic layer includes a so-called three-element catalyst which reduces oxides of nitrogen and oxidizes carbon monoxide and hydrocarbons. Exhaust gases that have been treated by the catalytic converter are then expelled through the exhaust and muffler system into the atmosphere. An O₂ sensor that detects the concentration of oxygen in the exhaust gas is also mounted in the exhaust manifold.

This O₂ sensor may be such as to emit a signal when the air/fuel mixture ratio (A/F) is too rich, or a signal when the A/F is too lean, or a signal when there is a transition from rich to lean.

The mixture-forming device 6 is located at the side of the gas-fueled engine 1 and connected to the upstream end of the foregoing air intake manifold 20; it creates the air/fuel mixture that is supplied to the combustion chambers. It is composed of a variable venturi or mixer 22 and a separate throttle valve device 23. This throttle valve device 23 is attached to the air intake manifold 20.

The lower opening of the foregoing mixer 22 includes a main unit 24 which is connected to the foregoing throttle valve device 23. An air intake passage 25 is present at the top of this main unit 24, and this air intake passage 25 is connected to the air cleaner 26. This arrangement allows supplying air from the atmosphere to the air intake passage 25 by introducing it through the air introduction opening 26a of the air cleaner 26 and then passing it through the filter element 26b.

The above mentioned mixer 22 is equipped with a piston 28 that is slidably mounted in a chamber 27 so that said piston 28 projects into the foregoing air intake passage 25. The chamber 27 houses a coil spring 29 which exerts a force upon the piston 28 to close air intake passage 25. Also, a metering rod (needle valve) 32 which operates in concert with a main jet 31 of pressure chamber 30 that is connected to the pressure regulator 3 is installed in the front end of the piston 28.

The main jet 31 and needle valve 32 are shaped so that no matter what the air intake flow volume is, they maintain an approximately constant A/F mixture, while maintaining the average aperture of the below-described bleed air control valve 33 at an approximately constant value. In addition, a bleed port 34 is formed in the front end of piston 28 which passes inside and outside of chamber 27.

On the other hand, the top part of chamber 27 comprises an atmospheric air port 35 which opens upstream from where the above mentioned main jet 31 opens into the venturi area. The atmospheric air port 35 is designed so that the pressure of the atmospheric air on piston 28 causes it to open the air intake passage 25. It would also be possible to design this atmospheric air port 35 to make it pass through chamber 27 and open on the atmospheric air side.

When there is a negative pressure on the downstream side of the piston in the air intake passage 25 in the above-described structure, the piston 28 moves toward the chamber 27 and opens the flow passage; this design allows the passage's cross-section to be effectively varied, thereby effectively maintaining an essentially constant negative pressure in the throat area into which the main jet 31 is directed.

The foregoing throttle valve device 23 consists of a butterfly throttle valve 36 which opens and closes in the air intake pipe member 23a due to the operation of the throttle. At its upstream end, it is connected to the mixer 22, while the throttle valve 36 is located in the downstream area of the air intake member 23a and is separated from the foregoing throat area by an adequate distance.

Also, an idle bypass passage 37 is present in the foregoing mixer 22 and detours around the above mentioned throttle valve 36. An idle speed control valve 38 is mounted in the idle bypass passage 37 in order to control the idle speed (RPM) of the engine 1. The above mentioned idle bypass passage 37 connects with the downstream end of mixer 22 and with the downstream side of throttle valve 36 in a manner such that mixed air fuel formed in the above mentioned throat area bypasses the throttle valve 36 and flows into the engine 1 from the side.

Since the idle speed control valve 38 is an electrical control valve, the cross section of the idle bypass passage 37 can be increased or decreased based upon control signals from the ECU 7, thereby controlling the flow of the air/fuel mixture through the idle bypass passage 37 to control the idle speed. The upstream-side opening of the idle bypass passage 37 is formed on the same surface as the air intake passage-side opening for the above mentioned main jet 31, so that a richer than normal mixture flows when the idle speed control valve 38 is open. In addition, the idle speed control valve 38 is located in close proximity to the mixer 22.

When, in the above described configuration of the idle bypass passage 37, the engine 1 is operating at lower or mid-range operating ranges in which a comparatively small amount of air/fuel volume is required, it is possible to perform feedback control on the air/fuel mixture by utilizing the signal from the O₂ sensor. This feature prevents overshoot in the air/fuel mixture control by speedily introducing the outflow from the main jet 31 into the combustion chamber to avoid delay in the feedback response.

Reference number 38 represents the intake air pressure sensor that is connected to the throttle valve device 23. This intake air pressure sensor 38 is designed to detect the pressure in the air intake passage 25 and to emit a signal to the ECU 7. The pressure value for the intake air that as detected by this intake air pressure sensor 38 is used to control the ignition timing of the gas-fueled engine 1.

In addition, the above described gas-fueled engine 1 is equipped with an EGR device 41 that reduces Noₓ emissions in the exhaust gases. This EGR device 41 is composed of an EGR valve 42 and an EGR regulator 43. The EGR valve 42 controls the volume of exhaust gas that returns to plenum chamber 21 of the air intake manifold 20 by means of the first EGR line 44 and the second EGR line 45.

At this point, the structure of the bleed air control valve 33 will be explained.

The structure of the bleed air control valve 33 is such that the degree to which a valve element 33 a projects is controlled by a stepping motor; the valve element 33a controls the cross-sectional area of a bleed air passage 46 which opens on the downstream side of the constriction 30a of the fuel supply chamber 30 formed in the mixture-forming device 6. The ECU 7 controls the above mentioned stepping motor based upon the output signals from the O₂ sensor attached to the exhaust manifold using a feedback control system to drive the stepping motor. In addition, the upstream end of the foregoing bleed air passage 46 connects to the inside of the air cleaner 26 downstream of the filter element 26b.

When the throat area of the mixture-forming device 6 is put under a negative pressure, and in addition when the main jet 31 and the bleed air control valve 33 are open, the negative pressure of the air intake passage acts upon the fuel supply chamber 30 to draw gaseous fuel into the fuel supply chamber 30 from the pressure regulator 3 through the constricted area 30a; in addition, air is drawn through the bleed air passage 46. Hereinafter, this air will be termed "bleed air" in order to distinguish the air that is drawn in from the fuel supply chamber 30 from the air drawn into the throat area from the air cleaner 26.

This gaseous fuel and the bleed air are then mixed in the fuel supply chamber 30, and subsequently this mixture passes through the main jet 31 and is drawn into the air intake passage 25. Supposing that the negative venturi pressure that acts upon this fuel supply chamber 30 is constant (and similarly that the air intake volume is roughly constant), then it is possible to control the flow volume of gaseous fuel that is drawn into the fuel supply chamber 30 by changing the bleed air flow volume by adjusting the aperture of the bleed air control valve 33.

The mixture-forming device 6 controls the flow volume of gaseous fuel supplied to the air intake passage 25 by adjusting the aperture of the above described bleed air control valve 33. In other words, the bleed air control valve 33 controls the air/fuel ratio. The aperture of this bleed air control valve 33 is adjusted by increasing or decreasing the number of steps to the stepping motor that drives it. In this embodiment, when the bleed air control valve 33 is fully closed (aperture 0%) the step number is 0, and when fully open (aperture 100%) the step number is 100.

As shown in Figure 2, a bleed air flow volume regulator valve 47 providing the fine adjustment for the total bleed air volume is located near the bleed air control valve 33. This bleed-air flow-volume adjustment valve 47 has an adjustment screw located in the valve body at the front end, and it is held by a spring exerting force against it. The structure is such that it can increase or decrease the cross section of the passage that joins the air intake passage 25 with the fuel supply chamber 30.

Next, the procedure for controlling the air/fuel ratio by using this mixture-forming device 6 will be described.

The main jet 31, which operates in conjunction with the needle valve 32, has a conical shape so that when the engine is in a normal operating condition, even if the flow volume of intake air changes, the average step number for the bleed air control valve 33 maintained at an approximately constant value, and the A/F ratio (λ= 1) also remains approximately constant. The above mentioned λ is defined as follows: λ = F/Fc.

Here, F represents the actual air/fuel ratio, and Fc is the theoretical air/fuel ratio in the stoichiometric state. Accordingly, in a stoichiometric state, the air/fuel mixture is always λ = 1 no matter what the type or composition of the gaseous fuel.

Due to the above described relationship, when the throttle valve 36 is opened to increase the air intake flow, then piston 28 moves to enlarge the cross section of the opening of the main jet 31. As a result, the amount of gaseous fuel that is introduced from the main jet 31 into the air intake passage 25 is increased by an amount that corresponds to the above described increase in the bleed air volume. At this time, there is no need to change the aperture of the bleed air control valve 33. In other words, even when the step number for controlling the bleed air control valve 33 remains virtually constant, for example, at a value of 50, the result is the maintaining of a constant A/F ratio.

To explain this feature in further detail with reference to Figure 3, the Figure shows a graph of the relationship between the air intake volume and the fuel volume in a stoichiometric state (λ = 1) for the cases of using 100% propane and 100% butane as fuel. The units for the amount of air intake are mass flow, but those for the fuel are flow by volume in order to clarify the difference between propane and butane. Also, those data curves in the figure that are bent slightly indicate experimental results; they show the relationship between the air intake flow 10 and the fuel flow when various apertures were maintained for the bleed air control valve 33 using 100% propane. All the percentages refer to the % of aperture opening; aperture 0% (step 0) is completely closed, and aperture 100% (step 100) is completely open. The other aperture percentages show additional aperture values lying within that range.

From Figure 3 it can be seen that when there is no output from the O₂ sensor, and when the step number for the bleed air control valve 33 is maintained at a constant level while increasing the intake air flow, the fuel flows increases proportionately and the A/F ratio remains constant. Also, the bending data-curve for aperture 50% (step 50), which shows the results for 100% propane fuel, approximately overlaps the solid line for the stoichiometric state, meaning that if the step number is held at 50, a stoichiometric state may be maintained even when the air intake flow volume is changed.

Next the feedback control of the bleed air control valve 33 based upon the output signal from the O₂ sensor will be explained. The O₂ sensor emits a signal to ECU 7 indicating the air fuel mixture state (lean, stoichiometric, or rich). ECU 7 then makes a determination of whether or not the signal output by the O₂ signal is a rich signal. If the determination is made that it is the rich signal, it causes the stepping motor to be driven at the required speed to open the aperture of the valve element 33a of the bleed air control valve 33. At this time, the step number of the stepping motor would be increased from 50 to 55, for example. With the increase of the step number, the amount of bleed air in the fuel supply chamber 30 increases, causing the amount of fuel to decrease by that same amount. As a result, the air/fuel ratio changes from being in a rich state to a leaner state.

Also, when it is determined that the O₂ sensor is emitting a lean signal, the ECU 7 operates in a manner opposite from that described above and causes the bleed air control valve 33 to be driven toward the closed side, for example, from step 50 to step 45. This reduces the bleed air volume inside the fuel supply chamber 30 in response to the reduced step number, thereby increasing the amount of fuel flow by that same amount. As a result, the air/fuel ratio moves from a lean or stoichiometric state to the rich side.

This feedback control allows maintaining the air fuel mixture at the theoretical mixture ratio. Also, in this particular embodiment, when feedback control is absent (in other words, when the signal from the O₂ sensor is not used to drive the bleed air control valve 33), even when the flow volume of intake air changes, the A/F remains approximately constant at a constant step number (50) (in the λ = 1 state) because of the shape of the needle valve 32. The result is that feedback control is always initiated from the same starting step number (50), so that the movement on the part of the bleed air control valve 33 to maintain λ = 1 is held to an absolute minimum, thereby enabling quicker control. The flow volume of the bleed air introduced into the foregoing fuel supply chamber 30 is very small by comparison with the air intake flow, and accordingly the bleed air volume makes no direct contribution to the A/F ratio. Also, because the flow of fuel is controlled by the supply of bleed air, there is no need to make corrections for the fuel flow due to operations at high altitudes. The reason is that both the bleed air and the fuel are gases, therefore their respective densities are affected in a similar manner.

The pressure regulator 3 that supplies fuel to the foregoing mixture-forming device 6 is configured as shown in Figure 4. In Figure 4, reference number 51 denotes a housing which forms the main body of the pressure regulator 3. The above mentioned fuel line 2a is connected to this housing 51 at an inlet tube 52, and in addition, this inlet tube 52 is linked with an inlet passage 53. The inlet passage 53 extends to a first pressure regulation port 54, and this first pressure regulation port 54 is opened and closed by a first pressure regulation valve 55.

The foregoing first pressure regulation valve 55 is operated by means of a first force-exerting member 58, which is comprised of an adjustment screw 56, spring 57, etc. A first cover plate 59 is also attached to the foregoing first housing 51, and this configuration creates a first pressure regulating chamber 60 inside the housing 51. The gage pressure of the first pressure regulation chamber 60 can be set to about 0.3 kg/cm² to adjust the foregoing first force adjustment member 58.

A diaphragm 61 and a second cover plate 62 are attached on the side of the foregoing housing 51 opposite the first cover 59. These components form a second pressure regulation chamber 63. This second pressure regulation chamber 63 is linked to the foregoing first pressure adjustment chamber 60 through a linking passage 64. A second pressure regulating valve 65, which can be opened and closed, is mounted in the opening of this linking passage 64 on the second pressure regulation chamber side. The operation of this second pressure regulating valve 65 is performed by means of a second force-exerting member 66 which links it to the movement of the above mentioned diaphragm 61. Atmospheric pressure operates on the back side of diaphragm 61 by means of an atmospheric port 62a.

To wit, by the adjustment of the foregoing second force-exerting member 66, it is possible to set the fuel pressure inside the above mentioned second pressure regulating chamber 63 to be slightly lower than atmospheric pressure. With this setting, the fuel passes through the fuel supply passage 67, then passes through the fuel line 2b that is connected to the fuel supply passage 65 and finally, it moves on to the fuel supply chamber 30 of the foregoing mixture-forming device 6.

In addition, a heating passage 68 has also is present within the forgoing housing 51. This heating passage 68 is positioned adjacent to the foregoing inlet passage 53, and it circulates water heated in the cleaning jacket 17 of engine 1, as shown in Figure 1, through the coolant supply line 3a and the coolant return line 3b. Thus, the heat from the engine coolant is transmitted to the introduction line in the housing 51. Fuel, which flows into the inlet passage 53 in a liquid state is almost entirely vaporized when it flows from the first pressure regulation port 54 to the first pressure regulation chamber 60. In other words, this pressure regulator 3 makes use of the heat of the engine coolant to vaporize the liquid fuel which compensates for latent heat and raises the temperature of the fuel itself.

The above mentioned ECU 7 contains a central processing unit (CPU, not shown) and it controls the ignition timing and fuel control by means of the mixture-forming device 6 based upon detection of engine RPM by a sensor (not shown), upon the position of the throttle for throttle valve 36, the exhaust gas temperature, the engine coolant temperature that is detected by the coolant temperature sensor 25, and the concentration of O₂ gas in the exhaust gases that is detected by the O₂ sensor.

The fuel supply device configured as described above vaporizes the fuel from fuel tank 2 in the pressure regulator 3, and then the gaseous fuel is mixed at the set air/fuel ratio in the mixture-forming device 6, whereupon it is supplied, mixed with air, to the engine 1. Also, since the mixture-forming device 6 is composed of a separate mixer 22 and throttle valve device 23, it becomes possible to position the throttle valve 36 an adequate distance away from the venturi unit, at the side of engine 1.

Accordingly, even if oil mists and other contaminants that enter the air intake passage 25 by means of the EGR 41, etc. and then are blown back, they are blocked by the throttle valve 36 in the vicinity of the engine 1. Further, even if the above mentioned contaminants would happen to get past the throttle valve 36 and move upstream, virtually all of them would be pushed back by the comparatively high air intake flow of dense mixed air and fuel flowing from the venturi to the throttle valve 36.

This design prevents such contaminants from attaching to the main jet 31 or to the venturi of the mixture-forming device 6, thereby enabling it to maintain its initial properties over a long period of time.

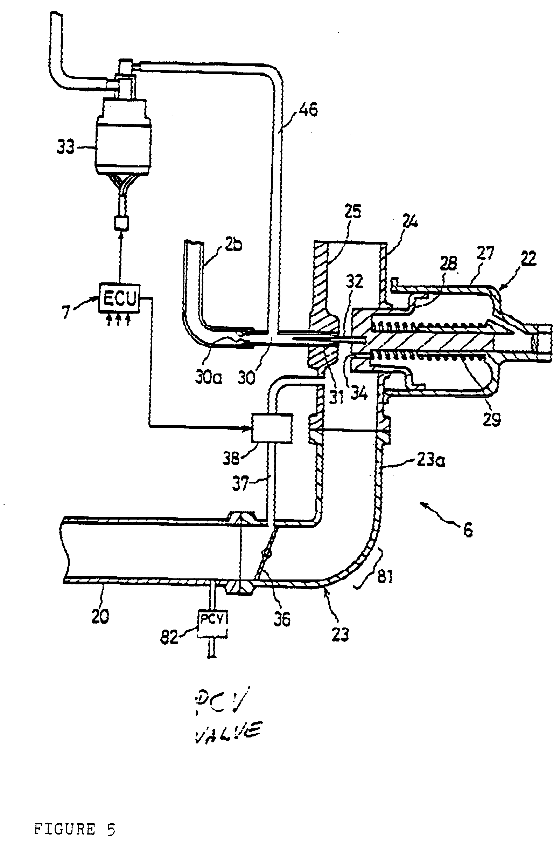

It is also possible to change the design of the mixer 22 and the throttle valve 36 of the mixture-forming device 6 in the ways shown in Figures 5 through 9.

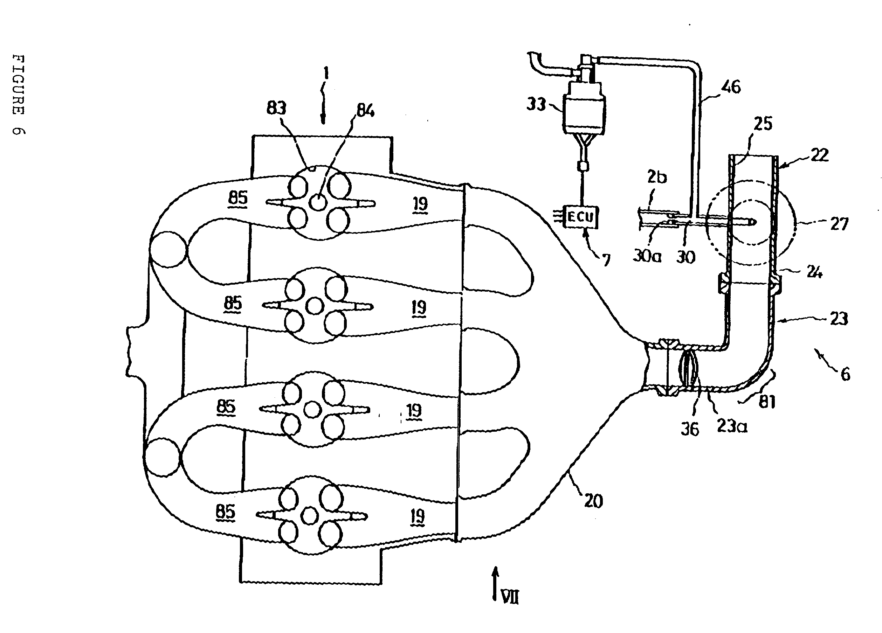

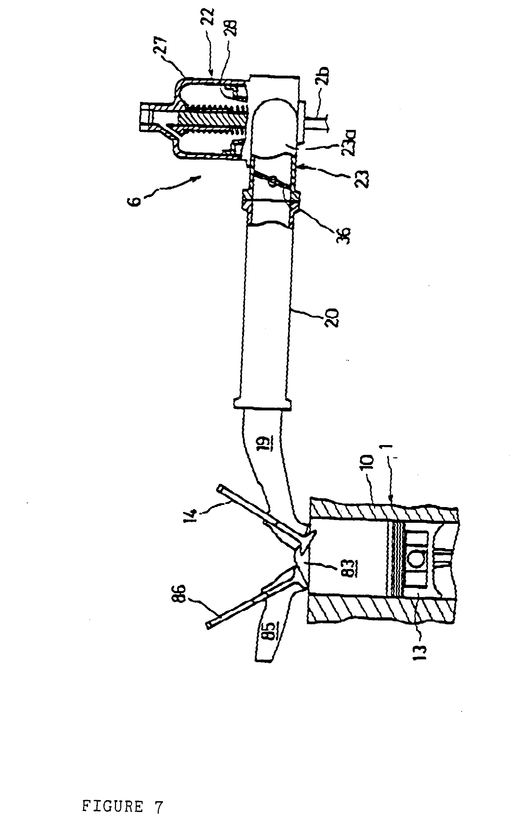

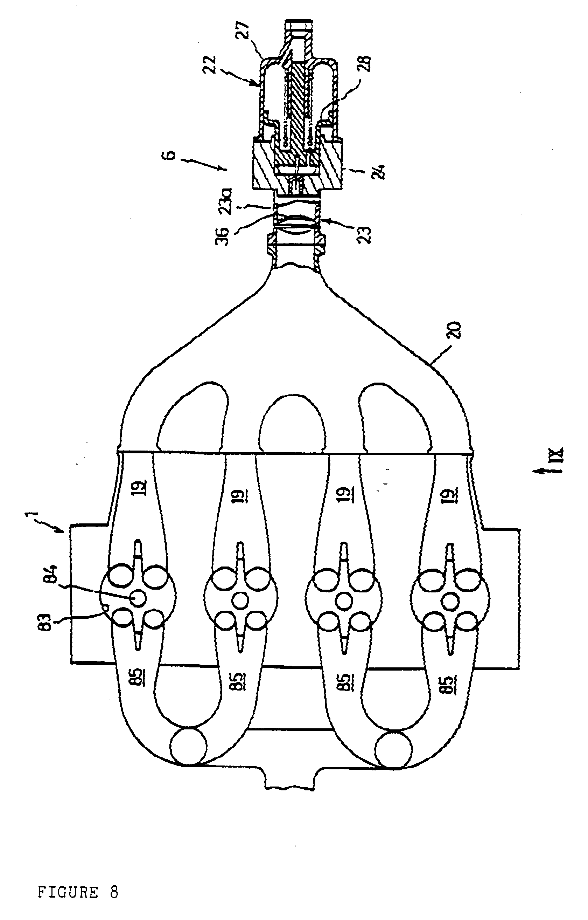

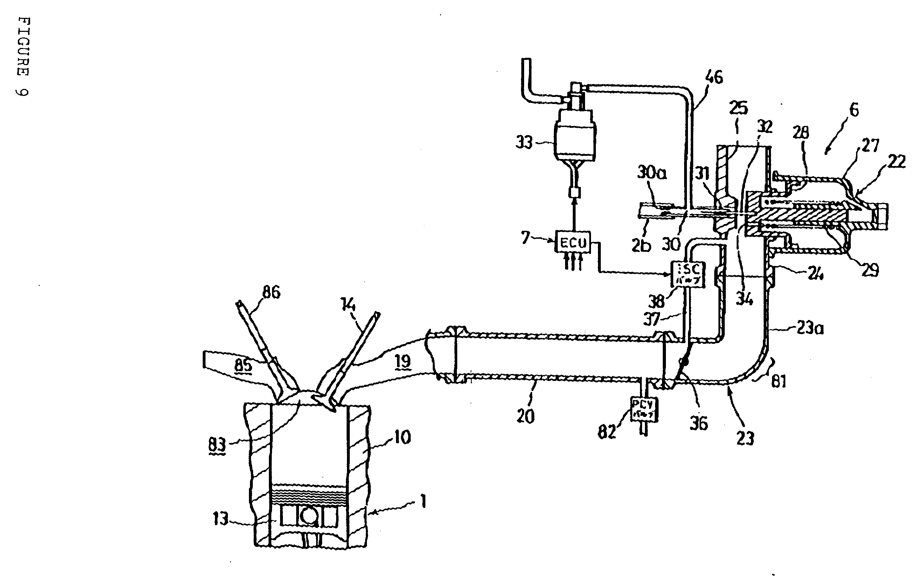

Figure 5 shows a top sectional view of another embodiment in which the piston axis and the air intake pipe member 23a lie within the same horizontal plane. Figure 6 shows a top sectional view of another embodiment wherein the central axis of the air intake pipe member 23a lies in a horizontal plane and which is perpendicular to the vertical axial line of the piston. Figure 7 is a perspective view sighted along arrow VII of Figure 8, and Figure 8 is a top sectional view showing another embodiment wherein the axial line of the piston and the center line of the air intake pipe member 23a run through the same vertical plane. Figure 9 is a perspective view sighted along arrow IX of Figure 8. The component parts shown in these figures that correspond to those in Figures 1 through 4 bear the same reference numbers, and detailed explanation of these will be avoided.

The air intake pipe member 23a for the throttle valve devices 23 shown in Figures 5 through 9 all comprise a bend area 81, which is a bend of about 90 degrees. The throttle valve 36 is positioned downstream of the bend area 81. Reference number 82 appearing in Figures 5 and 9 represents the PCV valve which allows blow-by gas from the engine 1 flow into the air intake system. This PVC valve 82 is attached to the air intake manifold that is connected to the downstream side of the throttle valve device 23. Also, 83 represents combustion chambers for each cylinder, 84 the spark plugs, 85 the exhaust passages, and 86 the two exhaust valves per each cylinder.

The mixer 22 shown in Figure 5 is similar to the one shown in Figure 2 in that the axial line of the piston 28 is horizontal. In addition, the air intake pipe member 23a of the throttle valve device 23 also extends horizontally in correspondence to the air intake passage 25. The axial line of the throttle valve 36 extends vertically.

The axial line of the piston 28 of the mixer 22 shown in Figures 6 and 7 is vertical, and the air intake passage 25 extends horizontally. The air intake pipe member 23a of the throttle valve 23 extends horizontally as well. In this embodiment, the axial line of the throttle valve 36 is horizontal.

The axial line of piston 28 of the mixer 22 shown in Figures 8 and 9 is horizontal, and the air intake passage 25 extends vertically. In addition, the air intake pipe member 23a of the throttle valve device 23 extends horizontally downstream of its bend 81 which vertically connects to the mixer 22. The axial line of the throttle valve 36 extends horizontally.

As shown in Figures 5 through 9, bends 81 were made in the air intake pipe member 23a and the throttle valve 36 was positioned downstream of these bends 81. This design causes any comparatively heavy contaminating particles blown back from engine 1 upstream of the throttle valve 36 to collide with the inside wall of the bend area 81.

This design provides even more reliable prevention against any contaminating substances being deposited upon the main jet 31 or venturi area of the mixer 22. In addition, since gaseous fuel is being used, changing the shape of the air intake pipe member 23a, as was done for the alternative embodiments, still allows an assured supply of fuel to reach the engine 1. In other words, the shape of the air intake pipe member 23a can be altered to accommodate the engine mounting position and to avoid interference between it and the surrounding equipment. Thus, the present invention provides a great deal of latitude in the design of the air intake system.

Also, because the throttle valve 36 has been located at an adequate distance from the mixer 22, the axial direction of the piston 28 in mixer 22 and the axial direction of the throttle valve 36 may be entirely independent from each other. The reason is that the gaseous fuel drawn into the venturi remains approximately uniformly distributed throughout the entire range of the air intake passage 25 until it passes the throttle valve 36. Extremely broad design latitude results in positioning the drive mechanism for the throttle valve 36, and in turn in a high degree of freedom in designing the air intake system.

The embodiments shown in the foregoing Figures 1 through 9 were used on a 4 cylinder type engine 1,

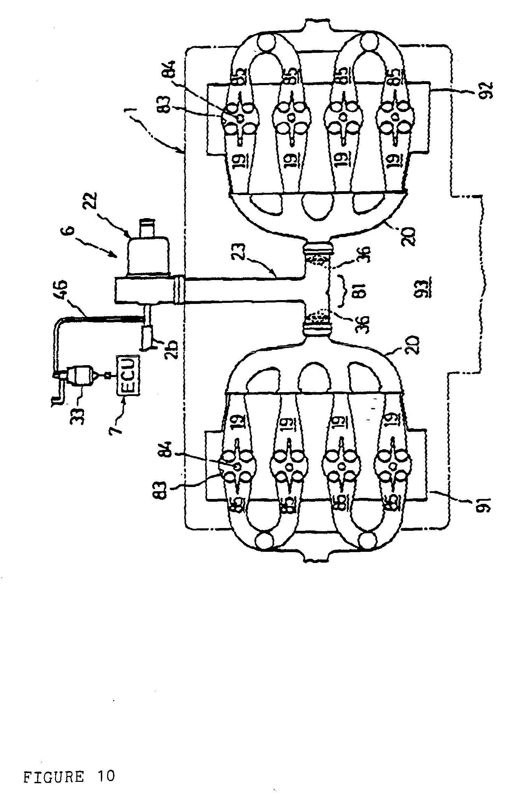

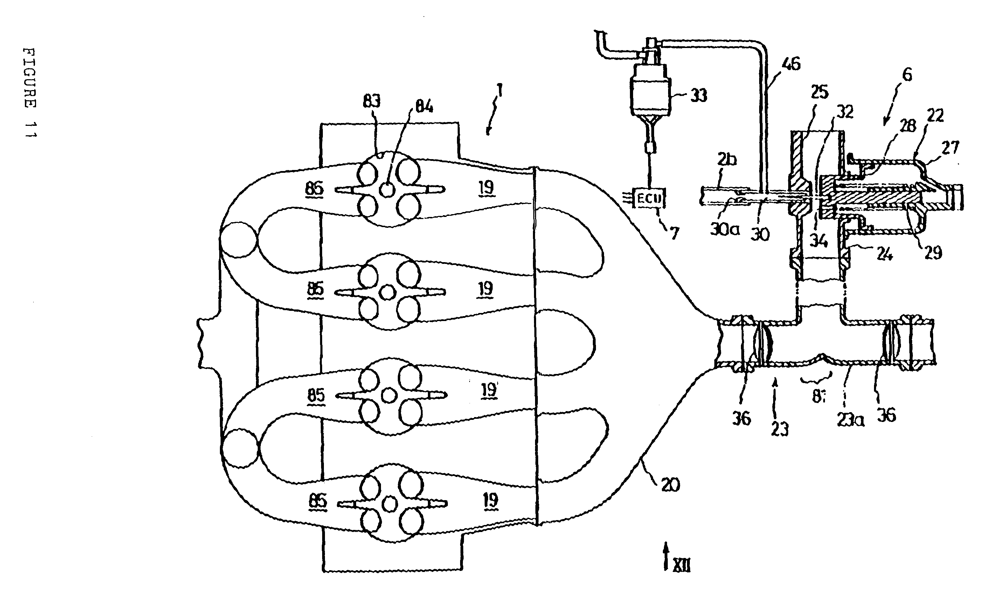

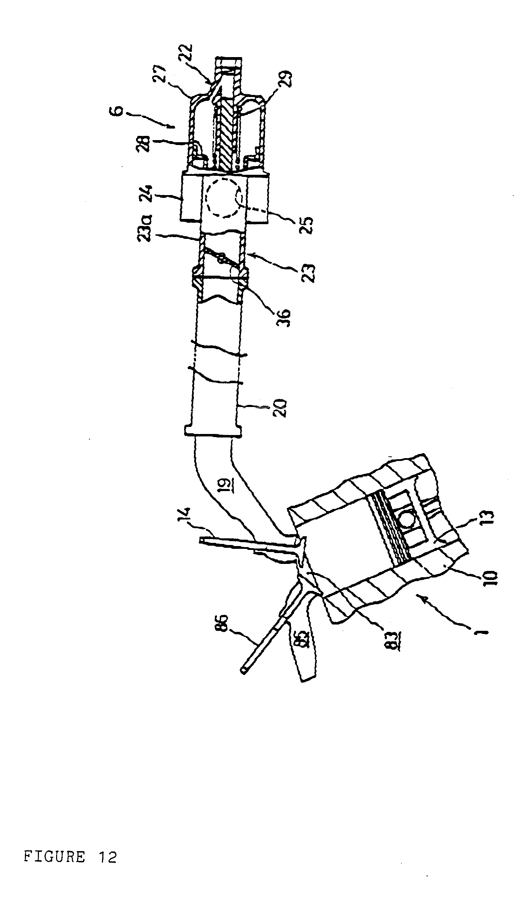

Figure 10 shows a top view of a V-type gas-fueled engine 1 equipped with the fuel supply device of this invention; Figure 11 is an enlarged top sectional view of the principal parts from Figure 10; and Figure 12 is a view of Figure 10 sighted along arrow XII. Components which correspond or are equivalent to those explained for the foregoing Figures 1 through 9 bear the same reference numbers and detailed explanation of them will be omitted.

The engine 1 shown in Figures 10 through 12 is a V-type engine formed from two cylinder banks 91, 92 composed of 4 cylinders each. An air intake manifold 20 is present for each of the cylinder banks 91,92 that are located inside the V-bank 93. A throttle valve device 23 is connected upstream to the openings of these air intake manifolds 20 inside the V-bank 93. In this embodiment, in order for a common air intake pipe 23a to service the air intake manifolds 20 for the two rows of cylinders, the air intake passage inside the air intake pipe 23a has been branched in two directions on the downstream side, in a manner such that it is T-shaped when viewed from above. Throttle valves 36 are installed in the downstream side of each of the branches of the air intake pipe 23a. In this embodiment, the axes of the throttle valves 36 are horizontal.

Further upstream of the air intake pipe 23a is the mixer 22. As is shown in Figure 10, it is located outside the V-bank 93 in the crankshaft direction. As shown in Figure 12, the throttle valves 36 located inside the V-bank 93 are positioned at roughly the same height as the mixer 22 which is located outside the V-bank 93.

Thus, when the fuel supply device of this invention is connected as shown to a V-type engine 1, the comparatively small sized throttle valves 36 are located inside the V-bank 93 of engine 1, while the comparatively large mixer 22 is located outside the V-bank 93, and such an arrangements does not add to the overall engine height requirements. Accordingly, when this V-type engine 1 is mounted in an automobile, the height of the hood need not be increased.

LPG gas was used as the gaseous fuel in the foregoing embodiments, but equivalent effects may be obtained when using other gaseous fuels such as LNG gas (liquefied natural gas) or CNG gas (natural gas). However, when CNG gas is used, a fuel vaporizing device is not needed.

As described above, the fuel supply device for a gas-fuelled engine employs a variable venturi mixture-forming device to mix the gaseous fuel with the air for supply to the engine, wherein this variable venturi mixture-forming device is composed of a variable venturi mixer and a throttle valve which is formed separately from this mixer, to assure an adequate distance to separate the throttle valve from the venturi unit on the side of the engine. This arrangement prevents contaminants such as oil mists that are blown back into the air intake passage from moving backward past the throttle valve located in close proximity to the engine, and further the backward flow of such contaminants from the venturi to the throttle valve is virtually completely prevented by the relatively high density air intake flow.

This design inhibits the adhesion of carbon and other deposits from forming on the openings in the venturi and the main jet, thereby maintaining their initial properties for a long period of time.

Also, since an adequate separation between the throttle valve and the venturi can be provided, it is possible to select the axial direction of the mixer piston without regard to the axial direction of the throttle valve. In addition, more design latitude is afforded for the air intake pipe in shaping it to avoid interference with the engine or peripheral equipment, and in designing the length to match the desired engine characteristics. In other words, greater freedom is provided for the design of the air intake system.

As regards the design of the fuel supply device for gas-fuelled engine, the fuel supply device for gas-fuelled engines related to another preferred embodiment further provides that the throttle valve be positioned downstream of a bend area in the air intake pipe member so that any heavy contaminants that have been blown back past the throttle valve into the air intake system will be prevented from moving further backward by their collision with the inner wall at the bend area.

Accordingly, this design prevents even further the possibility of contaminants adhering to the main jet of the mixer or to the venturi unit.

The other preferred embodiment according to the present invention provides that the variable venturi mixture-forming device be connected to an air intake passage that opens inside the V-bank of the V-type engine, and that the throttle valves be located inside the V-bank, while the variable venturi mixer be located outside the V-bank in the axial crankshaft direction, thereby allowing the emplacement of the comparatively small throttle valves inside the V-bank, and of the comparatively large variable venturi mixer outside the V-bank.

This arrangement prevents the air/fuel intake system from adding to engine height requirements, so that when mounting this V-type engine in an automobile, hood height need not be increased.

## Claims

1. Gas-fuelled engine (1) comprising a charge forming system having a variable venturi device (22) that mixes gaseous fuel with air, and a throttle valve device (36) being disposed separated from and downstream of the variable venturi device (22), **characterized in that** the engine (1) is of the V-type comprising a V-bank arrangement of two rows (91, 92) of cylinders (10a) having a crankshaft, and that the throttle valve device (36) is disposed inside a V-space of the V-bank arrangement, while the variable venturi device (22) being disposed outside of the V-bank arrangement in an axial direction of said crankshaft.

2. Gas-fuelled engine as claimed in claim 1, characterised in that, said throttle valve device (36) being communicated to the upstream variable venturi device (22) via a bend area (81) of an air intake member (20).

3. Gas-fuelled engine as claimed in claim 1 or 2, **characterised in that,** an axis of a butterfly type throttle valve (36) of the throttle valve device (36) is disposed at about the same height with respect to the bottom of the engine (1) as a metering piston (28) of the variable venturi device (22).

4. Gas-fuelled engine as claimed in claim 1, **characterised in that,** the air intake passage connecting the variable venturi device (22) and the throttle valve device (36) branches via bent areas (81) inside the V-bank arrangement into two downstream ends, each connected to an intake manifold (20) of a respective row of cylinders and supporting a butterfly type throttle valve (36) in said downstream ends.

5. Gas-fuelled engine as claimed in at least one of the preceding claims 1 to 4, characterised in that, a fuel supply system comprises a fuel valve vaporisation device (3) which creates gaseous fuel by heating and vaporising liquid fuel.

6. Gas-fuelled engine as claimed in claim 5, **characterised in that,** said fuel vaporisation device is a fuel pressure regulator (3).

## Patentansprüche

1. Mit Gas betriebene Brennkraftmaschine (1) mit einem Aufladungssystem, das eine variable Venturivorrichtung (22) aufweist, die gasförmigen Kraftstoff mit Luft mischt, und mit einer Drosselventilvorrichtung (36), die stromabwärts der variablen Venturivorrichtung (22) und getrennt davon angeordnet ist, **dadurch gekennzeichnet,** daß die Brennkraftmaschine (1) eine des V-Typs ist mit einer V-Reihenanordnung von zwei Reihen (91,92) von Zylindem (10a) und mit einer Kurbelwelle, und daß die Drosselventilvorrichtung (36) innerhalb eines V-förmigen Raumes der V-Reihenanordnung angeordnet ist; während die variable Venturivorrichtung (22) außerhalb der V-Reihenanordnung in einer axialen Richtung der Kurbelwelle angeordnet ist.

2. Mit Gas betriebene Brennkraftmaschine (1) nach Anspruch 1, **dadurch gekennzeichnet,** daß die Drosselventilvorrichtung (36) mit der stromaufwärtigen variablen Venturivorrichtung (22) über einen gebogenen Bereich (81) eines Luftansaugteiles (20) kommuniziert.

3. Mit Gas betriebene Brennkraftmaschine (1) nach Anspruch 1 oder 2, **dadurch gekennzeichnet,** daß eine Achse eines Drosselventils (36) des Klappentyps der Drosselventilvorrichtung (36), bezogen auf den Boden der Brennkraftmaschine (1), in etwa auf der gleichen Höhe angeordnet ist wie ein Dosierkolben (28) der variablen Venturivorrichtung (22).

4. Mit Gas betriebene Brennkraftmaschine (1) nach Anspruch 1, **dadurch gekennzeichnet,** daß der die variable Venturivorrichtung (22) mit der Drosselventilvorrichtung (36) verbindende Luftansaugkanal sich innerhalb der V-Reihenanordnung über gebogene Bereiche (81) in zwei stromabwärtige Enden aufteilt, von denen jedes an einen Ansaugkrümmer (20) einer entsprechenden Reihe von Zylindern angeschlossen ist, wobei ein Drosselventil (36) des Klappentyps in diesen stromabwärtigen Enden abgestütz ist.

5. Mit Gas betriebene Brennkraftmaschine (1) nach mindestens einem der vorstehenden Ansprüche 1 bis 4, **dadurch gekennzeichnet,** daß ein Kraftstoffversorgungssystem eine Kraftstoffverdampfungsvorrichtung (3) aufweist, die mittels Erhitzen und Verdampfen von flüssigem Kraftstoff einen gasförmigen Kraftstoff erzeugt.

6. Mit Gas betriebene Brennkraftmaschine (1) nach Anspruch 5, **dadurch gekennzeichnet,** daß die Kraftstoffverdampfungsvorrichtung ein Kraftstoffdruckregulator (3) ist.

## Revendications

1. Moteur (1) alimenté à gaz, comprenant un système de formation de charge ayant un dispositif à venturi variable (22) qui mélange un combustible gazeux avec de l'air, et un dispositif de soupape d'étranglement (36) étant placé à l'écart et en aval du dispositif à venturi variable (22), caractérisé en ce que le moteur (1) est du type en V comprenant un arrangement de ligne en V de deux rangées (91, 92) de cylindres (10a) ayant un vilebrequin et en ce que le dispositif de soupape d'étranglement (36) est disposé à l'intérieur d'un espace en V de l'arrangement de ligne en V, tandis que le dispositif à venturi variable (22) est disposé à l'extérieur de l'arrangement de ligne en V dans une direction axiale dudit vilebrequin.

2. Moteur alimenté à gaz selon la revendication 1, caractérisé en ce que le dispositif de soupape d'étranglement (36) communique avec le dispositif à venturi variable amont (22) par l'intermédiaire d'une région coudée (81) d'un élément d'aspiration d'air (20).

3. Moteur alimenté à gaz selon la revendication 1 ou 2, caractérisé en ce qu'un axe d'une soupape d'étranglement du type vanne-papillon (36) du dispositif de soupape d'étranglement (36) est disposé à peu près à la même hauteur par rapport au bas du moteur (1) qu'un piston de dosage (28) du dispositif à venturi variable (22).

4. Moteur alimenté à gaz selon la revendication 1, caractérisé en ce que le passage d'aspiration d'air reliant le dispositif à venturi variable (22) et le dispositif de soupape d'étranglement (36) se divise par l'intermédiaire de régions coudées (81) à l'intérieur de l'arrangement de ligne en V en deux extrémités aval, chacune reliées à un collecteur d'admission (20) d'une rangée respective de cylindres et supportant une soupape d'étranglement du type vanne-papillon (36) dans lesdites extrémités aval.

5. Moteur alimenté à gaz selon l'une au moins des précédentes revendications 1 à 4, caractérisé en ce qu'un système d'amenée de combustible comprend un dispositif (3) de vaporisation de combustible qui crée un combustible gazeux par chauffage et vaporisation d'un combustible liquide.

6. Moteur alimenté à gaz selon la revendication 5, caractérisé en ce que ledit dispositif de vaporisation de combustible est un régulateur de pression de combustible (3).
